# EUROPEAN PATENT SPECIFICATION

(11) **EP 2 334 194 B1**
(45) Date of publication and mention of the grant of the patent: **01.05.2013**
(21) Application number: 09811137.0
(22) Date of filing: 08.09.2009
(51) Int. Cl.: A23F 5/44

(54) **REDUCTION OF ACRYLAMIDE IN ROASTED CHICORY**
REDUKTION VON ACRYLAMID BEI GERÖSTETEM CHICORÉE
RÉDUCTION DE L'ACRYLAMIDE DANS DE LA CHICORÉE TORRÉFIÉE

(30) Priority: 08.09.2008 EP 08163899
(43) Date of publication of application: 22.06.2011
(73) Proprietor: Nestec S.A., 1800 Vevey (CH)
(72) Inventor: THEURILLAT-MORITZ, Viviane, Andrée, Claude, CH-1350 ORBE (CH); CHMIEL, Wolfgang-Oliver, Stephan, CH-1400 YVERDON (CH); LELOUP, Valérie Martine, Jeanine, CH-1350 ORBE (CH); DOSSIN, Eric, 25370 JOUGNE (FR)
(74) Representative: Lomholt, Stig Bredsted
(86) International application number: PCT/EP2009/061660
(87) International publication number: WO 2010/026265

(56) References cited:
- US-A- 2 341 826
- US-A1- 2004 126 469
- CONFEDERATION OF THE FOOD AND DRINK INDUSTRIES OF THE EU: THE CIAA ACRYLAMIDE "TOOLBOX", December 2007 (2007-12), XP002513176
- DATABASE EPODOC EUROPEAN PATENT OFFICE, THE HAGUE, NL; XP002513616 & DK 404 689 A (JENSEN FRITS OESTERHOLM; ERTNER CAMILLA BENEDIKTE JENSEN FRITS OESTERH) 18 February 1991 (1991-02-18)
- DATABASE WPI Week 199824, Derwent Publications Ltd., London, GB; AN 1998-269778 & RU 2 091 034 C1 (CANNING VEGETABLES DRYING IND) 27 September 1997

## Description

### Field of the invention

The present invention relates in general to the processing of chicory in a way which reduces acrylamide formation, and to compositions containing chicory as a coffee substitute. In particular, it relates to a method of manufacture of roasted chicory and to the resulting roasted product. The product is suitable for use as such, in soluble coffee-substitute compositions and in soluble coffee-mixture compositions. The method is particularly suitable for reducing acrylamide formation during the roasting process.

### Background of the invention

Acrylamide was classified by the WHO International Agency for Research on Cancer (IARC) as a probable human carcinogen in 1994 on the basis of animal studies. At the time, it was believed that exposure resulted mainly from smoking and occupational activities. In April 2002, it was found that some food products, especially starchy foods such as crisps, French fries and bread, contained significant levels of acrylamide. Although no clear correlation between dietary intake of acrylamide and cancer risk has been evidenced, efforts are now made to minimize dietary exposure to acrylamide.

Acrylamide is one of the reaction products generated in foods during frying, baking or roasting, in Maillard reaction processes at high temperatures (e.g. above 120°C). Acrylamide results from the reaction between reducing sugars such as glucose and fructose with the lateral chain of some amino acids such as asparagine and methionine. The Maillard reaction is a desired reaction in food processing because it provides pleasant odour and taste to cooked foods, together with a change in colour.

A number of publications deal with the reduction of formation of acrylamide during food processing.

For instance an article by Amrein, T. et al. in J. Agric. Food Chem. (2004) 52:4282, describes that the acrylamide concentration can be reduced by more than 60% when using sodium hydrogencarbonate instead of ammonium hydrogenocarbonate as baking agent in the manufacture of gingerbread.

US 2004/0224066 also deals with a method for suppressing acrylamide formation by treating a food product with an acrylamide-formation suppressing agent prior to a high temperature heating step. The acrylamide-formation suppressing agent may be selected from a multivalent cation, a chelating compound, a carbonyl group blocker or a combination of any of these agents.

An acrylamide generation depressant comprising a calcium salt, a basic amino acid or its salt and/or rosemary extract and being added to a processed food consisting mainly of carbohydrate prior to heat treatment is the subject of JP2005-278448.

US 2004/0126469 is also concerned with a method for decreasing acrylamide in food cooked under heat by providing the food with a polyvalent metallic compound.

In addition, US 2007/178219 pertains to acrylamide-reducing agents which are added to cell walls having asparagine and which have been weakened.

A review of the potential strategies of control of acrylamide formation in food products is found in an article by Stadler, R. H. et al. in Nutrition Reviews, 2004, vol. 62, no. 12, 449-467. This article insists on the fact that due to the wide variety of food matrices and food processing methods, it is very difficult to provide guidelines applicable in each case.

In the CIAA Acrylamide "Toolbox" (December 2007), it is suggested to reduce the roasting temperature and increase the roasting time in order to reduce acrylamide formation in roasted chicory. All of the prior art cited above deals mainly with acrylamide generation upon heat-treatment of starch-based products, such as potato-based or cereal-based food products. It is also in many cases linked to the processing of these food products with fats or oils.

There is thus still a need to provide an efficient way to overcome acrylamide generation in the manufacture of coffee mixtures and coffee-substitute compositions, in particular when these comprise chicory.

### Object of the invention

An object of embodiments of the invention is thus to provide an adapted processing method for the manufacture of coffee mixtures or coffee substitutes comprising roasted chicory, which minimises the production of potentially harmful compounds while preserving the visual and organoleptic properties of coffee mixtures or coffee substitutes.

### Brief description of the invention

This object is solved by means of the independent claims. The dependent claims further develop the central idea of the invention.

Thus, in a first aspect, the invention relates to a method for the manufacture of roasted chicory comprising the steps of
a. impregnating non-roasted chicory with an aqueous solution comprising divalent cation, prior to roasting and
b. roasting said impregnated chicory;
wherein the divalent cations are in a concentration of between 1.0 wt% and 4.0 wt% of the aqueous solution.

It further relates to the roasted chicory obtainable by such method.

Roasted chicory comprising less than 1500 ppb acrylamide and art least 0.5 wt% calcium and/or magnesium content also forms part of the invention.

Finally, the invention also pertains to a coffee-substitute composition comprising such roasted chicory. The invention also pertains to a soluble beverage composition comprising an extract from such roasted chicory.

### Figures

The invention is described in the following by making reference to the following figures, which illustrate some preferred embodiments of the invention:
- Fig. 1 shows the roasting time of chicory as a function of the calcium chloride concentration used for soaking the chicory prior to heat treatment.
- Fig. 2 shows the impact of a calcium chloride pre-treatment on acrylamide formation.
- Fig. 3 shows the impact of soaking chicory with magnesium chloride prior to heat treatment on acrylamide levels in roasted chicory.
- Fig. 4 shows the colour development in chicory with (4B) and without (4A) calcium chloride pre-treatment after 30 minutes of roasting.

### Detailed description of the invention

The present invention relates to a method for the manufacture of roasted chicory. By "chicory" is meant chicory roots, and more precisely roots of the plant *Cichorium intybus* L., as used in the art in the manufacture of chicory-based products and coffee substitutes comprising chicory. Other coffee substitutes are known. Usually, they undergo various treatments, including roasting, before being used as coffee substitutes. Further examples of coffee substitutes are wheat bran, barley, malt, rye, acorns, figs, groundnuts, dates, carobs, lupins, chickpeas, or soy beans.

The method of the invention comprises the first step of impregnating non-roasted chicory with an aqueous solution comprising divalent cations. This step is carried out prior to roasting.

The fresh chicory roots are washed to remove dirt and stones. Then, typically, the washed chicory is chopped into pieces such as chips, cubes or lamellas. Usually, said pieces have a dimension of about 10 mm. For instance, chicory lamellas or slices may be from about 5 mm to about 10 mm thick, for instance 8 mm thick. Cubes may have side dimensions ranging from about 8 mm to about 15 mm. Here, the word "cube" is not intended to mean only perfectly regular cubes. It also encompasses pieces that have an overall cube shape.

The impregnation step may be carried out by any method known to a skilled person. For instance, it may include spraying, coating, dipping, soaking, washing etc. Preferably, the impregnation is carried out by soaking, that is, by putting the chicory pieces into an aqueous solution, for a predetermined period of time, with or without agitation. Impregnation may be achieved in a continuous process or a batch process and various installations may be devised by a skilled person. In a preferred embodiment, fresh chicory pieces are thus impregnated with an aqueous solution of at least on e divalent cation.

Chicory pieces are impregnated with at least one divalent cation in aqueous solution. The divalent cation should be food-grade. Preferably the divalent cation is selected from calcium, magnesium or mixtures thereof. The divalent cation is provided as a food-grade salt. For instance, the salt may be selected among chloride, sulphate, phosphate or carbonate salts, or mixtures thereof. In an embodiment, calcium chloride, magnesium chloride, calcium sulphate, magnesium sulphate or calcium carbonate are used, or mixtures thereof. In another embodiment, chloride salts are used. Preferably, the aqueous solution for impregnation is a calcium chloride solution or a magnesium chloride solution. To prepare the aqueous solution for impregnation, the selected salt or salts is dissolved into waster, up to the desired divalent cation concentration. Then the aqueous solution is used for impregnation of chicory pieces, preferably by soaking. It is also possible to prepare a concentrate divalent cation solution which is dosed into the impregnation solution. It may be necessary to adjust the divalent cation concentration of the impregnation solution from time to time, due to the progressive exhaustion of the solution during impregnation of the chicory pieces.

It was found that impregnation with divalent cations reduces the production of acrylamide during a subsequent heat treatment. The amount of acrylamide in the heat treated products is therefore considerably reduced compared to heat treated products having not undergone the impregnation step of the present invention. As a comparison, acrylamide content in roasted chicory may range between 800 ppb and 10800 ppb. In Europe, acrylamide content in roasted chicory usually ranges between 3000 ppb and 10800 ppb. This variability reflects the differences between varieties, climates, crop and roasting conditions. The method of the invention allows a reduction of at least 60% of the acrylamide level in roasted chicory. In some cases, the reduction of the acrylamide level in roasted chicory may be greater than 75%, or even 90%.This provides a great advantage over methods of the prior art.

The impregnation step offers the further advantage that the roasted chicory is enriched in minerals such as calcium and magnesium which provide the associated health benefits.

It is considered that a concentration of divalent cations greater than 4.0 wt% probably does not bring further advantages. In a preferred embodiment, the concentration of divalent cations in the aqueous solution used for impregnation is about 2.0 wt%, which corresponds approximately to a 180 mM CaCl₂ 2H₂O solution, and to a 100 mM MgCl₂ 6H₂O solution. Thus, the divalent cation concentration ranges from 1.0 wt% to 4.0 wt%, preferably from 1.5 wt% to 3.5 wt%, and still more preferably, from 1.8 wt% to 3.0 wt%.

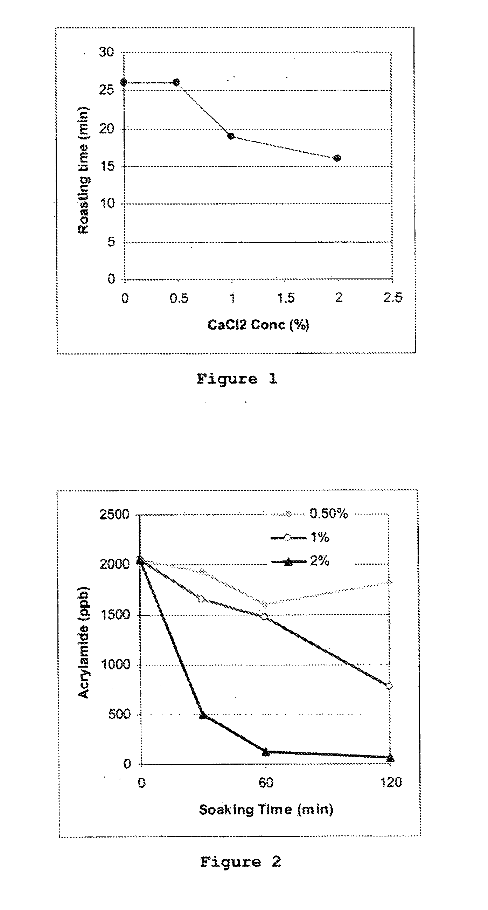

Referring to figure 2, it was found that at a lesser concentration of the divalent cations, for a similar impregnation time, the amount of acrylamide formation upon subsequent roasting was much higher. Using a 2wt% calcium chloride impregnating solution for 2 hours achieved 97% acrylamide level reduction, as shown in Figure 2.

Acrylamide content can be measured by LC-MS/MS. A method for sample preparation and acrylamide measure is described for instance in an article by Delatour et al. "Improved sample preparation to determine acrylamide in difficult matrixes such as chocolate powder, cocoa, and coffee by liquid chromatography tandem mass spectroscopy" J. Agaric. Food Chem. (2004) 52:46251, or in an article by Arisseto et al. "A modified sample preparation for acrylamide determination in cocoa and coffee products" Food Anal. Methods (2008) 1:49.

Additionally, as illustrated in figure 1, it was surprisingly found that such a concentration of divalent cations allows the reduction of the subsequent roasting time. In other words, when a roasting temperature is set, roasting time is shorter when processing impregnated chicory pieces rather than non-impregnated chicory pieces. Conversely, it is assumed that roasting may also be achieved at a lower temperature.

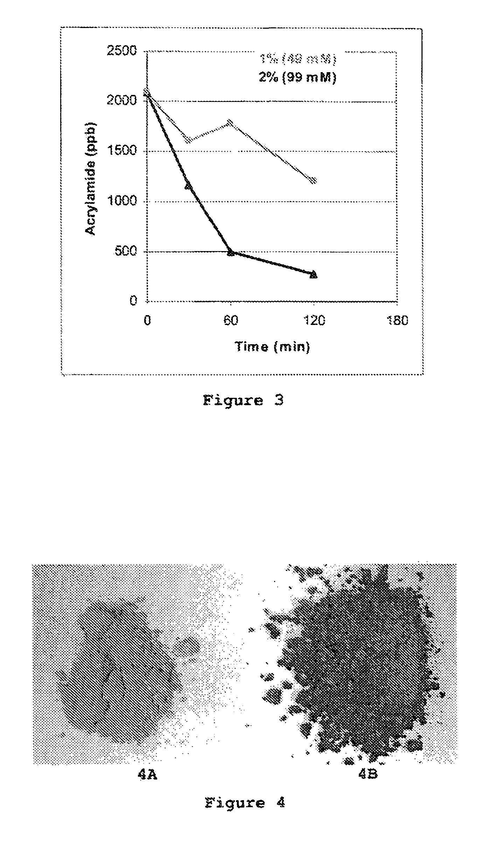

Roasting has the effect of providing the desired visual appearance to the coffee or coffee substitute. Flavours and aromas also develop during roasting. Referring to figure 4, it was found that after only 30 minutes of heating ground chicory, the desired colour development is achieved on a sample which has undergone calcium chloride impregnation pre-treatment (picture 4B of laboratory sample of figure 4). Comparatively, a sample having not undergone the pro-treatment step of the present method does not develop the desired colour in the same period of time (picture 4A of laboratory sample of figure 4).

Manufacturing conditions of roasted chicory are known to the skilled artisan. Thanks to the impregnation step carried out before roasting, it is possible to either reduce the roasting temperature or the roasting time. For example, the roasting may be carried out at a temperature of 100 to 200°C, preferably 130-180°C. The roasting temperature is not necessarily maintained at a constant level. In an embodiment, the roasting temperature is increased from between 130°C and 150°C to between 160°C and 175°C in the last minutes of roasting.

Roasting is terminated when the chicory pieces have reached the desired colour. This is assessed using sensory evaluation, which also takes into account further criteria such as flavour or smell.

This provides the advantages that energy costs are saved, thanks to the shorter heating time or lower roasting temperature.

The impregnation step is preferably carried out at ambient temperature, usually less than 25°C, and preferably between 4 and 10°C. It was found that the temperature of impregnation does not seem to have an impact on the reduction of acrylamide formation, compared to heated water. Therefore, impregnating, at these preferred temperatures reduces the energy costs while causing no negative influence on the efficiency of the method of the invention or on the effects achieved by the method.

The impregnation step is preferably carried out for at least 30 minutes, and preferably more than 1 hour. During impregnation, it is believed that the aqueous solution comprising divalent cations diffuses into the chicory pieces. Thus, the impregnation time should depend on the size of the chicory pieces. Usually, the impregnation step is carried out for less than 5 hours, preferably for less than 3 hours. Referring to figures 2 and 3, it is indeed clear that a soaking time of 2 hours provides optimal acrylamide reduction in a subsequent heating step.

The impregnation step may be carried out in a batch process or in a continuous process. For instance, in a batch process, fresh chicory pieces are dumped or poured in a container such as a tank. The container is filled with the impregnation solution. It may be equipped with stirring means. To reduce water consumption, the impregnation solution may be recycled from batch to batch, with a simple control of the divalent cation concentration. In a continuous process, the fresh chicory pieces are circulated in the impregnation solution, for instance with a feed screw or with a conveyor belt. Preferably, the impregnation solution flows in a direction opposite to the direction of the chicory pieces. In an embodiment, the impregnation solution is recycled and its divalent cation concentration is adjusted before recirculation.

Figure 3 shows the influence of the concentration of divalent cations and of the soaking time on acrylamide formation when using magnesium chloride as the divalent cation salt. In particular, fig. 3 shows that a reduction of about 87% on acrylamide level upon roasting is obtained upon soaking the coffee substitute with a 2 wt% magnesium chloride aqueous solution for 2 hours.

After impregnation, the chicory is preferably dried before roasting. In an embodiment, drying may be carried out in an oven at a temperature of about 80°C, for a period of 12-24h. Drying may be carried out using standard industrial methods known in the art such as drying in the sun or drying using various apparatus such as a drying drum, a drying tunnel or a belt drier. The drying time depends on the drying method and on the target humidity. For instance, drying in the sun may take up to 36 hours, whereas drying in a tunnel could be as short as a few hours, for instance 4 hours. For instance, in a tunnel drier, a drum drier or a belt drier, hot air is blown through the drier, at a temperature usually between 150°C and 500°C and the chicory pieces are moved in a direction opposite to the air flow. In that case, drying is carried out in a few minutes. Preferably, the humidity of the chicory pieces after drying is below 18% humidity, and more preferably below 15%. The final humidity of the chicory pieces should not be too low, otherwise the subsequent roasting step will not allow for a satisfactory flavour and colour development. Thus, in a preferred embodiment, the final humidity is greater than 10%. Preferably, the final humidity of the dried chicory pieces is about 12%.

After the optional drying step, the impregnated non-roasted chicory is roasted. Preferably, the roasting is carried out at a temperature of 100 to 200°C, more preferably about 130 to 190°C, and even more preferably about 150 to 180°C. Preferably, the roasting step is carried out for a period of 10 to 120 minutes, more preferably about between 60 and 90 minutes.

The prior impregnation step surprisingly offers the advantage that the roasting time and/or the roasting temperature can be considerably reduced. Indeed, the colour development desired upon roasting is achieved much more rapidly than in cases where the impregnation step has not been carried out (cf. fig. 4). Thus, the shorter roasting time or lower roasting temperature compared to traditional roasting time or temperature required to roast chicory enables energy savings, as well as provides the final product with very good visual and organoleptic properties. The organoleptic properties are indeed not affected by the impregnation with divalent cations.

The product obtainable by any embodiments of the method described above thus also forms part of the invention. Such product offers the advantages that the amount of acrylamide present in such product is considerably reduced compared to products obtained by traditional roasting processes, In embodiments of the invention, the products obtainable by the process have an acrylamide content of less than 1500 ppb (parts per billion), preferably less than 1200 ppb. In further embodiments of the invention, the products obtainable by the process have an acrylamide content of less than 1000 ppb, preferably Less than 900 ppb. For instance, the products obtainable by the process have an amount of acrylamide of less than 500 ppb, preferably less than 300 ppb, and more preferably less than 150 ppb. Furthermore, they are enriched in terms of calcium and/or magnesium when using these preferred cations in the impregnation step of the invention. The resulting products are thus healthier, while having excellent organoleptic and visual properties.

The roasted chicory obtainable by the method of the invention may be used as such or may be further processed depending on the desired end product. Such further processing step may include grinding, mixing, extraction, spray-drying, freeze-drying etc.

For instance, roasted and ground (R&G) chicory may be used as such as a coffee substitute. In such a use, R&G chicory may be used to brew a beverage, which is considered as a coffee substitute, with a traditional filter coffee-machine for instance. R&G chicory could also be mixed with R&G coffee, to obtain a coffee mixture, which may also be used to brew a coffee-like beverage.

A coffee substitute comprising less than 1500 ppb, preferably less than 1200 ppb, more preferably less than 1000 ppb acrylamide, and even more preferably less than 900 pub acrylamide, and at least 0.5 wt% calcium content and/or at least 0.5 wt% magnesium content also forms part of the invention. Such a coffee substitute comprises roasted chicory obtainable by the method of the invention. In an embodiment, such a coffee substitute has at least 0.6 wt% calcium content and/or 0.6 wt% magnesium content. A coffee substitute comprising less than 500 ppb, preferably less than 300 ppb, more preferably less than 150 ppb acrylamide, and at least 0.8 wt% calcium and/or magnesium content also forms part of the invention. In this context, it should be emphasised that fresh chicory root contains, on average, about 41 mg of calcium and 22 mg of magnesium per 100 g.

In the context of the instant invention, "coffee mixtures" should be understood as compositions comprising coffee solids and chicory solids. Coffee mixtures may optionally comprise other ingredients such as other coffee substitutes, sweeteners, whiteners, foamers, and mixtures thereof. Still in the context of the instant invention, "coffee substitutes relate to compositions which comprise chicory solids and optionally other ingredients such as other coffee substitutes, sweeteners, whiteners, foamers, and mixtures thereof. Coffee substitutes do not comprise coffee solids.

Such coffee substitute lends itself perfectly for incorporation in coffee-based food products or beverages, such as instant drink compositions for example. Instant drink coffee mixtures are considered. For instance, roasted chicory prepared according to the Method disclosed herein may undergo an extraction, alone for together with various amounts of roast and ground coffee, under conditions known to the skilled person. This results in a chicory extract or a coffee and chicory extract, which may be used in the manufacture of instant drink compositions. Examples of coffee mixtures compositions and coffee substitute compositions comprising roasted chicory extract are provided below in Example 3.

A soluble coffee mixture composition or coffee substitute composition comprising the coasted chicory of the invention is thus also part of the invention.

Such soluble composition can be in the form of freeze-dried or spray-dried granules, freeze-dried or spray-dried powders, concentrates, etc. as is known in the art to a skilled person.

The composition of the invention therefore provides all the advantages associated with the present method. They indeed are healthy, contain a minimised amount of potentially harmful compounds, and have excellent organoleptic and visual properties.

The present invention is further illustrated herein by means of the following non-limiting examples.

### Examples

### Example 1 - Calcium chloride impregnation

200 g of fresh chicory cut in lamellas was soaked at room temperature in a 0.5%, 1% and 2% (i.e. 45, 90, 180 mM) CaCl₂.2H₂O solution for 0.5, 1 and 2h and dried at 30°C overnight. The dried chicory was then milled and roasted at 170°C.

It was found that the soaking in calcium chloride leads to a faster colour development depending on the concentration. Thus, the roasting time decreased with increased calcium concentration in the impregnating solution (cf. Fig. 1).

It was also found that the acrylamide level was reduced with increased concentration of calcium in the impregnating solution as shown in figure 2. Thus, a 2 wt% solution after 2 hours impregnation achieved a 97% acrylamide reduction.

The conditions represented in figure 2 are as in the table below:

**Table 1**

| **CaCl₂ concentration (%)** | **Soaking time (min)** | **Acrylamide (µg/kg)** |
|---|---|---|
| 0 | 120 | 2049 |
| 0.5 | 30 | 1924 |
| 0.5 | 60 | 1604 |
| 0.5 | 120 | 1313 |
| 1 | 30 | 1654 |
| 1 | 60 | 1478 |
| 1 | 120 | 776 |
| 2 | 30 | 498 |
| 2 | 60 | 124 |
| 2 | 120 | 68 |

Legend for figure 2:
- filled lozenge: 0.5% concentration
- empty circle: 1% concentration
- triangle: 2% concentration

### Example 2 - Magnesium chloride impregnation

200 g of fresh chicory out in lamellas was soaked at room temperature in a 1% and 2% (i.e. 50, 99 mM) MgCl₂.6H₂O solution for 2h and dried at 80°C overnight. The dried chicory was then milled and roasted at 170°C.

Impregnation with magnesium chloride prior to roasting leads to a faster colour development than roasting without the prior soaking step.

Furthermore, the acrylamide level was reduced by 87% after 2 hours or soaking in a 2 wt% solution as shown in figure 3. The following table shows the conditions depicted in figure 3:

**Table 2**

| **MgCl₂ concentration (%)** | **Soaking time (min)** | **Acrylamide (µg/kg)** |
|---|---|---|
| 0 | 0 | 2090 |
| 1 | 30 | 1604 |
| 1 | 60 | 1772 |
| 1 | 120 | 1195 |
| 2 | 30 | 1158 |
| 2 | 60 | 498 |
| 2 | 120 | 280 |

Legend for figure 3:
- circle: 1% concentration
- triangle: 2% concentration

In addition the amount of magnesium in chicory was increased by a factor of 10 which is advantageous nutritionally.

### Example 3 - Beverage compositions

The composition of various instant drink beverages comprising chicory extract is indicated in wt% of their ingredients in the first column of table 3.

The acrylamide (AA) and magnesium (Mg) contents of these instant drink beverages was estimated depending on whether the chicory was treated according to the method described herein ("No treatm." vs. "With treatment") and on the average acrylamide content of untreated chicory (low content "L" vs. high content "H"). The estimated results are provided in table 3 below. In this example, chicory was treated as in example 2.

**Table 3**

| **Instant drink composition (wt%)** | **AA content in composition (ppb)** | | | **Mg content in composition (mg/100g)** | |
|---|---|---|---|---|---|
| | **No treatm.** | | **With treatment** | **No treatm.** | **With treatment** |
| | **L** | **H** | | | |
| coffee/chicory (70/30) | 1500 | 4200 | 450 | 350 | 600 |
| coffee/chicory (60/40) | 850 | 3200 | 300-450 | 310 | 640 |
| coffee/chicory (40/60) | 1250 | 3900 | 350-600 | 240 | 730 |
| glucose syrup/coffee/ chicory (50/30/20) | 720 | 1900 | 70-120 | 150 | 320 |
| cereal/chicory (80/20) | 1120 | 2720 | 350-450 | 115 | 360 |

As can be seen from the estimations of table 3, the acrylamide content of various beverage compositions is significantly reduced when using chicory extract prepared with roasted chicory made according to the method described herein, rather than roasted chicory prepared conventionally.

The final beverage compositions also exhibit an increased estimate magnesium content.

## Claims

1. Method for the manufacture of roasted chicory comprising the step of
a. impregnating non-roasted chicory with an aqueous solution comprising divalent cations, prior to roasting and
b. roasting said impregnated chicory;
wherein the divalent cations are in a concentration of between 1.0 wt% and 4.0 wt% of the aqueous solution

2. Method according to claim 1, wherein said divalent cations are selected from calcium, magnesium or mixtures thereof.

3. Method according to claim 1 or 2, wherein the impregnation is carried out by soaking.

4. Method according to any of the preceding claims, wherein the impregnation is carried out at a temperature of less than 25°C, preferably between 4 and 10°C.

5. Method according to any of the preceding claims, wherein the impregnation is carried out for 30 minutes to 5 hours.

6. Method according to any of the preceding claims, wherein the impregnated chicory is dried prior to roasting.

7. Method according to claim 6, wherein the drying is carried out until the chicory has a residual humidity between 10 and 15%.

8. Method according to any of the preceding claims, wherein the roasting is carried out at a temperature of 100 to 200°C, for a period of 10 to 120 minutes.

9. Roasted chicory obtainable by the method according to any of claims 1 to 8.

10. Roasted chicory according to claim 9 comprising less than 1500 ppb acrylamide and at least 0.5 wt% calcium and/or magnesium content.

11. Coffee-substitute composition comprising roasted chicory according to claim 9 or 10.

12. Soluble beverage composition comprising an extract from roasted chicory according to any of claims 9 or 10.

13. Soluble beverage composition according to claim 12, which is in the form of a soluble liquid or a soluble powder composition.

14. Soluble beverage composition according to claim 12 or 13, which further comprises coffee solids, and which optionally comprises sweeteners, whiteners, foamers and mixtures thereof.

## Patentansprüche

1. Verfahren zur Herstellung von geröstetem Chicorée, das die nachfolgenden Schritte aufweist:
a. Imprägnieren von ungeröstetem Chicorée mit einer wässrigen Lösung mit zweiwertigen Kationen vor dem Rösten und
b. Rösten des imprägnierten Chicorées;
wobei die zweiwertigen Kationen in einer Konzentration zwischen 1,0 Gewichts-% und 4,0 Gewichts-% der wässrigen Lösung vorhanden sind.

2. Verfahren nach Anspruch 1, wobei die zweiwertigen Kationen aus Kalzium, Magnesium oder Mischungen daraus ausgewählt sind.

3. Verfahren nach Anspruch 1 oder 2, wobei das Imprägnieren durch Einweichen durchgeführt wird.

4. Verfahren nach einem der vorhergehenden Ansprüche, wobei das Imprägnieren bei einer Temperatur von weniger als 25 °C, vorzugsweise zwischen 4 und 10 °C, durchgeführt wird.

5. Verfahren nach einem der vorhergehenden Ansprüche, wobei das Imprägnieren über 30 Minuten bis 5 Stunden durchgeführt wird.

6. Verfahren nach einem der vorhergehenden Ansprüche, wobei der imprägnierte Chicorée vor dem Rösten getrocknet wird.

7. Verfahren nach Anspruch 6, wobei das Trocknen durchgeführt wird, bis der Chicorée eine Restfeuchtigkeit zwischen 10 und 15% aufweist.

8. Verfahren nach einem der vorhergehenden Ansprüche, wobei das Rösten bei einer Temperatur von 100 bis 200 °C über einen Zeitraum von 10 bis 120 Minuten durchgeführt wird.

9. Gerösteter Chicorée, der durch das Verfahren nach einem der Ansprüche 1 bis 8 gewonnen werden kann.

10. Gerösteter Chicorée nach Anspruch 9, der weniger als 1500 ppb Acrylamid und mindestens 0,5 Gewichts-% Kalzium- und/oder Magnesiumgehalt besitzt.

11. Kaffeeersatzzusammensetzung mit geröstetem Chicorée nach Anspruch 9 oder 10.

12. Lösliche Getränkezusammensetzung mit einem Extrakt aus geröstetem Chicorée nach einem der Ansprüche 9 oder 10.

13. Lösliche Getränkezusammensetzung nach Anspruch 12, die die Form einer löslichen Flüssigkeits- oder einer löslichen Pulverzusammensetzung besitzt.

14. Lösliche Getränkezusammensetzung nach Anspruch 12 oder 13, die weiterhin feste Kaffeebestandteile aufweist und die wahlweise Süßungsmittel, Kaffeeweißer, Schaumbildner und Mischungen daraus aufweist.

## Revendications

1. Procédé pour la production de la chicorée torréfiée comportant les étapes suivantes:
a. imprégner de la chicorée non torréfiée avec une solution aqueuse comportant des cations divalents, avant la torréfaction et
b. torréfier ladite chicorée imprégnée;
les cations divalents étant dans une concentration entre 1,0 pourcent en poids et 4,0 pourcent en poids de la solution aqueuse.

2. Procédé selon la revendication 1, les cations divalents étant choisi de calcium, de magnésium ou de mélanges de ceux-ci.

3. Procédé selon la revendication 1 ou 2, l'imprégnation étant réalisée par trempage.

4. Procédé selon l'une quelconque des revendications précédentes, l'imprégnation étant réalisée à une température inférieure à 25 °C, de préférence entre 4 °C et 10 °C.

5. Procédé selon l'une quelconque des revendications précédentes, l'imprégnation étant réalisée pour une durée de 30 minutes à 5 heures.

6. Procédé selon l'une quelconque des revendications précédentes, la chicorée imprégnée étant séchée avant la torréfaction.

7. Procédé selon la revendication 6, le séchage étant réalisée jusqu'à ce que la chicorée a une humidité résiduelle entre 10 pourcent et 15 pourcent.

8. Procédé selon l'une quelconque des revendications précédentes, la torréfaction étant réalisée à une température de 100 °C à 200 °C, pour une durée de 10 à 120 minutes.

9. Chicorée torréfiée qui peut être obtenue par le procédé selon l'une quelconque des revendications 1 à 8.

10. Chicorée torréfiée selon la revendication 9, comportant moins de 1500 ppb de l'acrylamide et au moins 0,5 pourcent en poids de teneur en calcium et/ou en magnésium.

11. Composition de succédané du café comportant de la chicorée torréfiée selon la revendication 9 ou 10.

12. Composition de boisson soluble comportant un extrait de chicorée torréfiée selon l'une quelconque des revendications 9 ou 10.

13. Composition de boisson soluble selon la revendication 12, en forme d'une composition de liquide soluble ou d'une composition de poudre soluble.

14. Composition de boisson soluble selon la revendication 12 ou 13 comportant en outre des solides de café, et comportant facultativement des édulcorants, des substituts de crème, des mousseurs et des mélanges de ceux-ci.
